# EUROPÄISCHE PATENTANMELDUNG

(11) **EP 1 153 813 A2**
(43) Veröffentlichungstag der Anmeldung: **14.11.2001**
(21) Anmeldenummer: 01106886.3
(22) Anmeldetag: 20.03.2001
(51) Int. Cl.: B60S 3/00, B65G 19/02

(54) **Transportvorrichtung für Fahrzeuge**

(30) Priorität: 11.05.2000 DE 10023175
(71) Anmelder: WashTec Holding GmbH, 86153 Augsburg (DE)
(72) Erfinder: Decker, Wolfgang, 86441 Zusmarshausen-Wollbach (DE)
(74) Vertreter: Rapp, Bertram, Dr.

(57) **Zusammenfassung**

Eine Transportvorrichtung für Fahrzeuge weist ein endloses Kettenförderband auf, das am Anfang und am Ende der Transportstrecke über Kettenräder umgelenkt wird. Am Kettenförderband sind Transportrollen (4) angeordnet, die jeweils ein lenkbares Rad (6) des Fahrzeugs hintergreifen. Beidseits des Kettenförderbandes sind Seitenführungen für das Rad (6) des Fahrzeugs oberhalb der Fahrbahn (3) für das Rad (6) des Fahrzeugs angeordnet. Um ein schräg stehendes Rad (6) in Transportrichtung auszurichten, bestehen die Seitenführungen aus Führungsketten (9), die am Anfang und am Ende der Transportstrecke umgelenkt werden und die sich mit einer zum Kettenförderband unterschiedlichen Geschwindigkeit bewegen.

## Beschreibung

Die Erfindung betrifft eine Transportvorrichtung für Fahrzeuge nach dem Oberbegriff des Anspruches 1.

Eine derartige Transportvorrichtung ist der DE 37 32 542 C2 entnehmbar. Das endlose Kettenförderband besteht dort aus zwei Förderketten, zwischen denen in regelmäßigen Abständen Transportrollen verlaufen. Die Transportrollen hintergreifen ein lenkbares Rad des Fahrzeugs, das damit auf einer Fahrbahn abrollt, die zwischen den Förderketten angeordnet ist. Die Förderketten verlaufen hierbei oberhalb des Niveaus der Fahrbahn, wodurch sie zur Seitenführung des lenkbaren, von einer Transportrolle hintergriffenen Rads des Fahrzeugs dienen. Auf diese Weise werden die üblichen, beidseits des Kettenförderbands angeordneten stationären Führungsschienen vermieden, deren Nachteile ausführlich in der DE 37 32 542 C2 beschrieben sind. Bei dieser bekannten Vorrichtung bewegt sich das Fahrzeugrad längs der Fahrbahn mit der gleichen Geschwindigkeit wie die Förderketten bzw. die Transportrollen. Selbst bei eingeschlagener Lenkung am Fahrzeug wird ein Herausfahren aus dem Kettenförderband bzw. ein Auffahren auf die Förderketten verhindert.

Bei dieser bekannten Transportvorrichtung ist jedoch von Nachteil, daß im Laufe der Zeit eine ungleichmäßige Längung der Förderketten auftritt, was zu einer Schrägstellung der Transportrollen führt.

Dieser Nachteil tritt nicht auf bei Transportvorrichtungen mit nur einer Kette und einer mittigen Befestigung der Transportrollen. Hier ist es jedoch erforderlich, beidseits der Fahrbahn stationäre Führungsschienen vorzusehen, die aufgrund der Relativgeschwindigkeit des rollenden Rads im Verhältnis zu den Führungsschienen relativ hoch ausgeführt werden müssen, um ein Herausklettern des Fahrzeugs zu verhindern. Diese hohen Führungsschienen sind jedoch im Hinblick auf Niederquerschnittbereifungen und Aluminiumfelgen möglichst zu vermeiden.

Es besteht die Aufgabe, die Seitenführungen für das von einer Transportrolle geschobene Rad so auszubilden, daß sie unter Beibehaltung der Vorteile der erstgenannten Seitenführung für beide Arten von Transportvorrichtungen geeignet sind.

Gelöst wird diese Aufgabe mit den Merkmalen des Anspruches 1. Vorteilhafte Ausgestaltungen sind den Unteransprüchen entnehmbar.

Ein Ausführungsbeispiel wird nachfolgend anhand der Zeichnungen näher erläutert. Es zeigen:

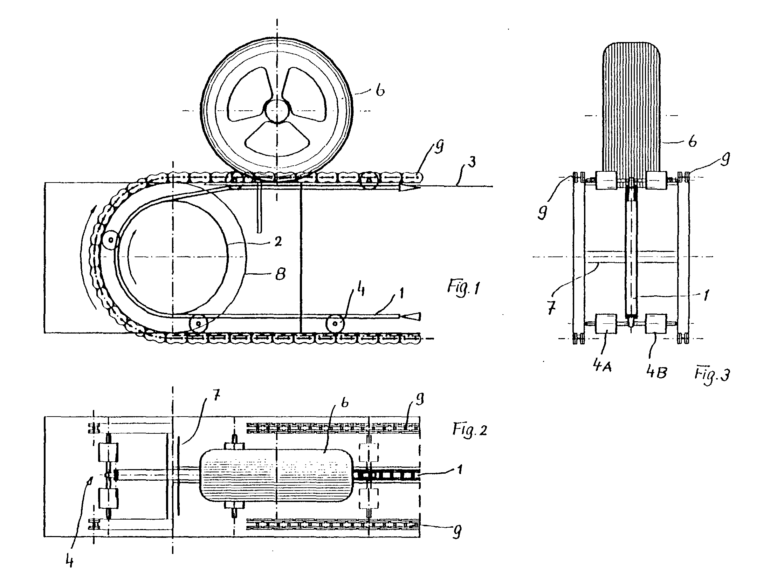

- **Figur 1:**: eine Seitenansicht des stimseitigen Bereichs einer Transportvorrichtung;
- **Figur 2:**: eine Draufsicht auf die Vorrichtung nach Figur 1;
- **Figur 3:**: eine stirnseitige Ansicht der Vorrichtung nach Figur 1;
- **Figur 4:**: eine der Figur 1 entsprechende Darstellung und
- **Figuren 5 bis 7:**: verschiedene Phasen des Ausrichtens eines schrägstehenden Rads.

Mit 1 ist ein flexibles Zugelement in Form einer mittigen Transportkette bezeichnet, die durch ein Kettenrad 2 umgelenkt wird. Vor der Umlenkung verläuft die Transportkette 1 unter Flur und wird nach der Umlenkung auf ein Niveau geringfügig unterhalb des Niveaus der Fahrbahn 3 angehoben. An der Transportkette 1 sind in gleichmäßigen Abständen Transportrollen 4 befestigt, die beidseits der Förderkette 1 eine Rollenhälfte 4A, 4B aufweisen. Im Bereich der Fahrbahn 3 stehen diese Rollenhälften 4A, 4B über das Niveau dieser Fahrbahn 3 über. Die Rollenhälften 4A, 4B hintergreifen ein lenkbares und längs der Fahrbahn 3 zu transportierendes Fahrzeugrad 6.

Auf der Welle 7 des Kettenrads 2 sind zwei weitere Kettenräder 8 angeordnet, die im Vergleich zum Kettenrad 2 einen dazu größeren Durchmesser aufweisen. Diese Kettenräder 8 sind beidseits des Kettenrads 2 und in gleichen Abständen zu diesem angeordnet. Über die Kettenräder 8 verläuft jeweils eine Führungskette 9, die im Bereich des Transportwegs oberhalb der Fahrbahn 3 verlaufen. Infolge der unterschiedlichen Durchmesser der Kettenräder 2, 8 weisen diese Führungsketten eine höhere Geschwindigkeit auf als die Förderkette 1.

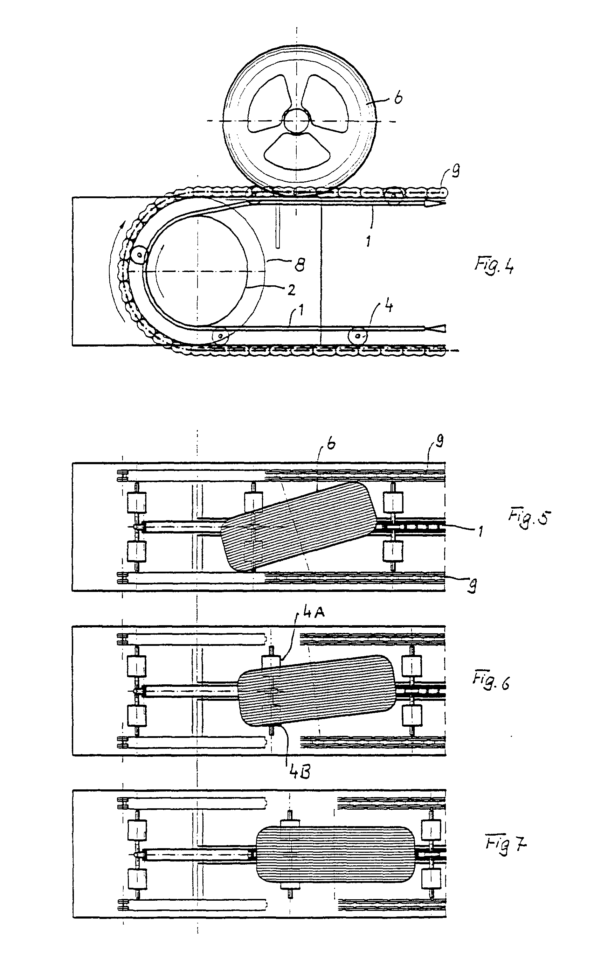

Steht ein Rad entsprechend der Figur 5 schräg zur Förderkette 1 und berührt die Führungsketten 9, dann wird auf das Rad 6 ein Drehimpuls ausgeübt, bei der Schrägstellung nach Figur 5 im Uhrzeigersinn. Da die Rolle 4B stärker gegen den Reifen drückt als die Rolle 4A, findet eine Drehbewegung entsprechend der Figur 6 statt, bis entsprechend der Figur 7 beide Rollenhälften gleichmäßig gegen den Reifen drücken.

Es sind eine Reihe von Modifikationen möglich. Beispielsweise können die Kettenräder 8 getrennt am Kettenrad 2 angetrieben werden. Es ist auch möglich, daß die Führungsketten 9 sich mit einer geringeren Geschwindigkeit bewegen als die Förderkette 1. Weiterhin ist es möglich, daß die eine Führungskette 9 sich schneller bewegt als die andere Führungskette 9. Dabei kann vorgesehen werden, daß die eine Führungskette 9 sich schneller bewegt als die Förderkette 1 und die andere Förderkette 9 sich langsamer bewegt als die Förderkette 1. Es ist auch möglich, daß die eine Führungskette 9 sich mit der gleichen Geschwindigkeit bewegt wie die Förderkette 1 und die andere Führungskette 9 sich schneller oder langsamer bewegt als die Förderkette 1. Da die Führungsketten 9 keiner Zugbelastung aus der Fahrzeugbeförderung ausgesetzt sind, können sie gegebenenfalls aus Kunststoff hergestellt werden.

Die Transportrollen 4 können schwenkbar über Exzenter am Kettenstrang der Förderkette 1 befestigt sein, so daß sie entweder unterhalb oder oberhalb des Niveaus der Fahrbahn 3 zu liegen kommen. Durch eine Schaltkulisse wird die Transportrolle 4 bei Bedarf nach oben gehoben und steht somit zur Förderung eines Fahrzeugs zur Verfügung. Soll kein Fahrzeug befördert werden, verbleiben die Transportrollen 4 unterhalb des Niveaus der Fahrbahn 3.

## Patentansprüche

1. Transportvorrichtung für Fahrzeuge mit einem endlosen Kettenförderband, das am Anfang und am Ende der Transportstrecke über erste Kettenräder (2), von denen eines angetrieben wird, umgelenkt wird, mit am Kettenförderband angeordneten Transportrollen (4), die jeweils ein lenkbares Rad (6) des Fahrzeugs hintergreifen, und mit zusätzlichen in Kettenlängsrichtung verlaufenden beidseits des Kettenförderbands angeordneten angetriebenen endlosen Bauteilen, die als Seitenführungen für das Rad (6) des Fahrzeugs dienen und oberhalb der Fahrbahn (3) für das Rad (6) des Fahrzeugs verlaufen, **dadurch gekennzeichnet, daß** sich die endlosen Bauteile mit einer zum Kettenförderband unterschiedlichen Geschwindigkeit bewegen.

2. Transportvorrichtung nach Anspruch 1, **dadurch gekennzeichnet, daß** in Transportrichtung gesehen die endlosen Bauteile sich mit einer höheren Geschwindigkeit bewegen als das Kettenförderband.

3. Transportvorrichtung nach Anspruch 1 oder 2, **dadurch gekennzeichnet, daß** die endlosen Bauteile aus Führungsketten (9) bestehen.

4. Transportvorrichtung nach Anspruch 3, **dadurch gekennzeichnet, daß** die Führungsketten (9) an ihrer dem Rad des Fahrzeugs abgewandten Seite abgestützt sind.

5. Transportvorrichtung nach Anspruch 3 oder 4, **dadurch gekennzeichnet, daß** die Führungsketten (9) am Anfang und am Ende der Transportstrecke über zweite Kettenräder (8) umgelenkt werden, deren Durchmesser größer ist als der Durchmesser des oder der ersten Kettenräder (1) des Kettenförderbands und eines der ersten und eines der zweiten Kettenräder (1, 8) einen gemeinsamen Antrieb aufweisen.

6. Transportvorrichtung nach Anspruch 3 oder 4, **dadurch gekennzeichnet, daß** die zweiten Kettenräder (8) getrennt von dem oder den ersten Kettenrädern (1) angetrieben werden.

7. Transportvorrichtung nach einem der Ansprüche 3 bis 6, **dadurch gekennzeichnet, daß** die Führungsketten (9) aus Metall bestehen.

8. Transportvorrichtung nach einem der Ansprüche 3 bis 6, **dadurch gekennzeichnet, daß** die Führungsketten (9) aus Kunststoff bestehen.

9. Transportvorrichtung nach einem der Ansprüche 1 bis 8, **dadurch gekennzeichnet, daß** die Transportrollen (4) aus zwei getrennt drehbaren Rollenhälften (4A, 4B) bestehen.
